# EUROPEAN PATENT SPECIFICATION

(11) **EP 2 015 384 B1**
(45) Date of publication and mention of the grant of the patent: **13.01.2016**
(21) Application number: 08104382.0
(22) Date of filing: 12.06.2008
(51) Int. Cl.: B29B 17/00, B29K 61/04, B29K 67/00, B29K 105/16, B29K 105/06, H01M 8/10, H01M 8/00, H01M 8/02, B29K 101/10

(54) **A method for producing recyclable bipolar plate and bipolar plates produced by this method**
Methode zur Herstellung einer recyclingfähigen bipolaren Platten und eine bipolare Platte hergestellt nach diesem Verfahren
Une méthode pour la production de plaque bipolaire recyclable et blaque bipolaire recyclable obtenu par cette méthode

(30) Priority: 15.06.2007 TR 200704155
(43) Date of publication of application: 14.01.2009
(73) Proprietor: TUBITAK-Turkiye Bilimsel ve Teknolojik Arastirma Kurumu, 06100 Ankara (TR)
(72) Inventor: Boyaci San, Fatma Gul, 41470, Gebze/Kocaeli (TR); Bican, Ismail, 41470, Gebze/Kocaeli (TR); Uysal, Selahattin, 41470, Gebze/Kocaeli (TR); Tekin, Gozde, 41470, Gebze/Kocaeli (TR); Erdor, Betul, 41470, Gebze/Kocaeli (TR); Okur, Osman, 41470, Gebze/Kocaeli (TR); Tiris, Mustafa, 41470, Gebze/Kocaeli (TR); Akgun, Fehmi, 41470, Gebze/Kocaeli (TR); Gunen, Evren, 41470, Gebze/Kocaeli (TR); Sener, Tansel, 41470, Gebze/Kocaeli (TR); Behmenyar, Gamze, 41470, Gebze/Kocaeli (TR); Okumus, Emin, 41470, Gebze/Kocaeli (TR); Genc, Fatih, 41470, Gebze/Kocaeli (TR); Saglam, Gaye, 41470, Gebze/Kocaeli (TR)

(56) References cited:
- WO-A-02/057365
- WO-A-2005/110664
- WO-A-2006/115684
- JP-A- 6 057 703
- JP-A- 11 288 732
- US-A1- 2005 211 630
- HANDLEY C ET AL: "Impact of the European Union vehicle waste directive on end-of-life options for polymer electrolyte fuel cells" JOURNAL OF POWER SOURCES, ELSEVIER, AMSTERDAM, NL, vol. 106, no. 1-2, 1 April 2002 (2002-04-01), pages 344-352, XP004348708 ISSN: 0378-7753

## Description

### Technical Field

The present invention relates to bipolar plates, which are one of the most important components of fuel cells, and more specifically, it refers to the production of thermosetting bipolar plates.

### Background Art

The rapid increase in the population, and people's demand to live a more comfortable life have led to an increase in the consumption of conventional fuels such as coal, petroleum, and natural gas. This has caused environmental problems such as warming and acid rains. Furthermore, the consumption of natural energy sources at such a high rate may cause them to deplete in the near future. For this reason, novel energy production sources that can supersede the existing ones should be investigated and developed. Fuel cells are one of the most important sources of energy production and are very advantageous as they have high energy densities, don't cause environmental and noise pollution, don't have moving parts, are modular and have fuel and settling flexibility and can supply continuous power.

A fuel cell is briefly a device that generates energy as a result of an electrochemical reaction between hydrogen and oxygen. A fuel cell converts chemical energy to electric energy by the reverse reaction of electrolysis. A fuel cell is comprised of an anode, a cathode and an electrolyte in between. Fuel cells are grouped into five depending on the type of the electrolyte used. These are alkaline fuel cells (AFC), phosphoric acid fuel cells (PAFC), molten carbonate fuel cells (MCFC), solid oxide fuel cells (SOFC), and polymer electrolyte membrane (PEM) fuel cells. During the chemical conversion in the fuel cells, heat generation, the amount of which depends on the type of the fuel cell occurs and so the total energy efficiency of the fuel cell increases.

Of those fuel cells differing from each other in electrolyte types, AFC, PAFC, MCFC and SOFC are designed for generating power from several hundred kilowatts up to mega watts, which is sufficient for use in mobile phones and residential applications. Therefore, the market for the fuel cell is limitless. Fuel cell usage ranges from transportation vehicles such as automobiles, cars, space vehicles, locomotives, submarines to portable devices such as mobile phones and laptops, and stationary applications such as household, offices, hospitals, hotels, industry and power generation plants.

Recently, PEM fuel cells, because of their higher efficiency and environmental friendliness became more advantageous when compared to conventional power generation systems. A PEM fuel cell stack mainly comprises of electro catalyst layers (anode and cathode), a membrane electrode units comprised of an electrolyte (membrane), bipolar plate, current collector plate, and sealing and joining elements. A fuel cell stack is formed by connecting a certain amount of fuel cells depending on the desired power output.

Bipolar plate is one of the most important components of a fuel cell and occupies %80 by volume and weight of the fuel cell. In literature, bipolar plates make up %15-45 of the total stack cost. Especially, since most of the time PocoTM graphite is used in single cell and graphite adds the extra cost of flow field machining in bipolar plates, the bipolar plates make up %60 of the total cost. Therefore, bipolar plates vastly affect the weight, volume and cost of the stack. For this reason, the bipolar plate material supplying gas to the fuel cell should be cheap, easily machinable/formable, and light. Simultaneously, it should also have high electrical and thermal conductivity, be resistant to corrosion and it should have high strength. Also, it should have low gas permeability and be suitable for recycling.

Many studies have been made on increasing the power density of fuel cells, developing methods suitable for mass production, and to lower the cost of bipolar plates.

Bipolar plates can be grouped into 3 depending on the types of materials used. These groups are mainly, non-porous graphite, metallic and composite bipolar plates. Composite bipolar plates can be grouped into 2. These groups are polymer and metallic composites. Polymer composites are comprised of a polymeric binder and conductive filler and they are grouped into two depending on the polymer type used. These two are thermosetting and thermoplastic composites. Each bipolar plate material has its advantages and disadvantages when compared to the other types. Polymer composites, the advantages of which are high corrosion resistance, low gas permeability and high strength, are manufactured using thermosetting and thermoplastic binders and graphite/carbon fillers.

Thermoplastic and thermosetting polymers along with non-corrosive and conductive fillers such as carbon and graphite fillers are used in the production of bipolar plates. In addition to these, various additives such as rheological modifiers, reinforcing, and mold release agents are also used.

In bipolar plate production, design parameters such as
1. Stack performance
2. System performance
3. Manufacturing
4. Environmental influence

should be taken into consideration. Especially the stack and system performance should be maintained. Manufacturing design characteristics should be taken into consideration with the environment impact. In environmental characteristics, it is required that the bipolar plate be recyclable.

Since they change shape with heat, thermoplastic bipolar plates can be used again many times, but thermosetting bipolar plates do not have the same feature.

There are a lot of patents concerning the production of composite bipolar plates for fuel cells.

U.S. Pat. No. 4,214,969 and U.S. Pat. No. 4,339,322 discloses thermoplastic composites used as bipolar plates for fuel cells. Graphite and polyvinylidene fluoride are mixed in the first patent, whereas graphite and thermoplastic fluoropolymer is mixed in the latter in a ratio of 2.5:1 and 16:1. Carbon fibers of mean diameter of 0.05 inch are also added to the mixture to improve the mechanical properties. The plates are formed by compression moulding. Composite plates comprised of thermosetting resins are described in U.S. Pat. No. 4,301,222, U.S. Pat. No. 4,265, 727, U.S. Pat. No. 4, 670, 300, U.S. Pat. No. 4, 737, 421, and U.S. Pat. No. 4, 197, 178. In U.S. Pat. No. 4,301,222 graphite/phenol composites are used, in U.S. Pat. No. 4,265,727 thermosetting resins comprising graphite fiber and powder are used, in U.S. Pat. No. 4,670,300 and U.S. Pat. No. 4,737,421 composite plate production by the carbonization or graphitization of cellulose fiber and thermosetting resin precursor plates are explained, in U.S. Pat. No. 4,197,178 electrically conductive powder material, and preferably epoxy thermosetting resin moulding is described. Graphite bipolar plates are suitable for application because of their conductivity and corrosion resistance. However, graphite plates require many production steps such as preparation with phenol resin and high temperature carbonization. Furthermore, bipolar plates are brittle and the machining of the flow fields is expensive. U.S. Pat. No. 4,124, 747 describe that composite prepared with conductive materials such as carbon black, graphite and metal have bad mechanical properties and are porous, and therefore, the mixture of thermoplastic polymers and conductive fillers are not suitable for application in fuel cells. However, it is also described that bipolar plates made up of crystalline propylene-ethylene thermoplastic copolymer and at least %30 by weight carbon black and/or graphite mixture have resistances approximately 0.5-10 Ωcm. In U.S. Pat. No. 4, 686, 072 it is explained that carbon/graphite fillers and plastic polymers are alternatives to graphite in conductive bipolar plate production.

U.S. Pat. No. 4, 098, 967, disclosed bipolar plates manufactured for use in lead acid batteries. In these plates, thermoplastic and %40-80 by weight vitreous carbon is used. The conductivity of vitreous carbon is lower than that of carbon black and graphite and therefore it requires more filler. When compression moulding is used as the manufacturing process along with high loadings of carbon, the manufactured plates have bad mechanical properties and high porosity.

Patents JP-A-58-53167, JP-A-60-37670, JP-A-60-246568, JP-B-64-340, JP-B-6-22136, and WO97/02012 disclose the production of PEM bipolar plates using thermosetting resins such as phenols, and conductive fillers such as graphite and carbon black. In patent JP-B-57-42157, epoxy resin and graphite is used and in JP-A-1-31570 expanded graphite, carbon black and phenol or furan resins are used. In Pat JP-A-8259767 carbon black and ethylene-ethyl acetate copolymer and in Pat JP-A 2000-243409 carbon powder and thermosetting resin is used. Patent GB-A-2-326017 discloses a bipolar plate manufactured from a plastic material that is made conductive by an electro conductive filler like carbon powder and WO 98/53514 disclose bipolar plate production using phenol resin, graphite powder, and SiO₂ particles. Sheet moulding and bulk moulding components are described in U.S. Pat. No. 5,998,510, U.S. Pat. No. 5,342,554, U.S. Pat. No. 5,854, 317, U.S. Pat. No. 5,744,816 and U.S. Pat. No. 5,268,400.

In Taiwan Patent No. 399348, a homogenous mixture is formed with at least one electrically conductive filler (%50-95), at least one resin (approximately %5) and one hydrophilic agent, and is molded at 500°C and 500-4000 psi. The resin may be a thermoplastic, thermosetting or a mixture thereof. The conductive filler may be graphite, carbon black, carbon fiber or a mixture thereof.

In U.S. Pat. No. 6, 248,467, the particle size of the graphite is between 80 (177 microns) and 325 mesh (44 microns)in the range and vinyl ester is used as a binder.

In WO Pat 00/57506, conductive graphite with particle size ranging between 44-150 microns is used, and the amount of the particles of which larger than 150 microns is <%10, and the amount of particles smaller than 44 microns is<%10.

Conductive or semi-conductive materials produced from polymeric plastics using carbon black, graphite and metal powder and thermoplastic and thermosetting resins such as melamine, phenol formaldehyde, polyethylene or graphite copolymer are disclosed in U.S. Pat. No. 4, 169, 816. U.S. Pat. No. 3, 853, 808 and U.S. Pat. No. 3, 819, 568 describe that bipolar plates can be reinforced with glass fiber, but that reduces the electrical conductivity. U.S. Pat. No. 4002595 describe that the addition of %1 silica to a mixture comprised of carbon black and polyethylene increases the conductivity, but its addition in %3-5 reduces it.

U.S. Pat. No. 2002005508 disclose composite plate production using an unsaturated polyester and vinyl ester resin, a copolymer having a terminal ethylene group, enough conductive material and polymerization initiator to make the conductivity of the final product reach 40 S/cm by injection moulding in which the direction of the material feeding is vertical to the plane of injection. Apart from this, during the moulding, a rheological modifier (group II oxides, and hydroxides, carbodiamides, aziridines, polyisocyanates, polytetrafluorethylene, perfluoropolyether, polyethylene and fumed silica) is used and plates that have conductivity values of at least 50 S/cm are manufactured.

U.S. Pat. No. 20020037448 describe a composite material in which unsaturated polybutadiene and polyisoprene are used in various amounts.. The composite also comprises synthetic graphite as conductive fillers, organic peroxides (dicumyl peroxides, di (2-tert-buthylperoxyisopropyl) benzene, t-butylperbenzoate, 2,5 dimethy-2,5 di(t-buthyl peroxy) hexyne-3 or combinations thereof) and the amount of conductive filler in the composite material is %10-90. The resistance of the composite material is about 0.04 Ωcm or less.

U.S. Pat. No. 2002/0001743 disclose a mixture of conductive material with a mass fraction of %33-98 and a binder material comprised of thermosetting and thermoplastic resins with a mass fraction of %2-67, which is subjected to an abrasive material after it is molded to render the required resistance and surface roughness.

U.S. Pat. No. 2005/0089744 disclose bipolar plate production using polybenzoxazine and conductive carbon. The weight ratio of polybenzoxazine to carbon black is described in the patent.

WO 03/047016 discloses a bipolar plate with a hydrophobic coating. The bipolar plate is comprised of a thermosetting and thermoplastic polymer and conductive carbon and is manufactured by compression moulding. Its active area is made up of a hydrophobic material, or is coated with a hydrophobic layer, and this layer gives the plate the ability to clean itself by utilizing the Lotus effect.

U.S. Pat. No. 2004/013914 discloses bipolar plate production using a thermosetting and thermoplastic polymer and conductive filler by injection moulding. WO 01/89013 disclose composites in which thermosetting and thermoplastic polymers and %10-85 by weight nanotubes with mean diameters varying between 1-300 nm are used.

WO 03/049212 discloses a powder mixture consisting of graphite and resin. This mixture is cold worked at ambient temperature to form a plate and the obtained plate is cured at a suitable temperature. It is reported in the patent that the amount of the graphite in the mixture and the particle size of the graphite is very important.

WO 02/15302 disclose bipolar plate production using synthetic graphite, thermosetting polybutadiene or polyisoprene and describe their properties (chemical resistance and hydrolysis resistance, excellent mechanical properties, approximately 0.04 Ωcm or lower resistance, at least 5 watts/ meter K heat conductivity).

U.S. Pat. No. 2003/0038279 disclose composite production using phenol resin as the thermosetting resin, electrically conductive graphite with particle size ≤50 µm and fiber length/mean fiber diameter ≥2 microns by compression moulding.

U.S. Pat. No.2005/0109990 discloses bipolar plate production with various thermosetting polymers (functionalized poly (arylene ether, alkenyl aromatic monomer, acryloyl monomer) and a conductive agent, and plate properties.

WO 0025372 discloses non-expensive, electrically conductive, strong, and corrosion resistant and hydrogen impermeable bipolar plate production using vinyl ester resin and graphite powder by compression moulding. Moreover, it describes how to improve the properties of materials without the aid of reinforcing fibers and additives.

U.S. Pat. No. 41497178 disclose bipolar plate production using electrically conductive material and thermosetting resin in a ratio of 1:1 and 9:1.

U.S. Pat. No. 5364914 describe the moulding, and curing of mixtures containing thermosetting resins and polyarylsulphone that are non self adhesive up to 60°C , self adhesive at temperatures in the range 60-150°C, and hardenable at temperature over 150°C.

WO 03100892 discloses bipolar plates manufactured to be used in fuel cells and batteries consisting of plastic matrices comprising electrically conductive carbon fiber.

Apart from bipolar plate production, there are also patents concerning the recycling of thermosetting.

U.S. Pat. No. 6620363 discloses rubber type thermosets that are mixed with certain lubricants after pulverization, and then under pressure and extruded into paste form.

U.S. Pat. No. 5801205 describe %30-80 by weight thermoplastic resin (PP, ABS, PVC, nylon) is processed with pulverized %20-70 thermosetting resin (polyurethane). At the end of this process, 15 mm and smaller granules are obtained.

U.S. Pat. No. 6673289 describes a recyclable expanded graphite material used in flexible plates. In this patent, the resin impregnated graphite is turned into particles, and the resin is removed from the particles at high temperatures.

U.S. Pat. No. 192809 describes the conversion of thermosetting polymers such as polyurethane and unsaturated polyester resin to volatile low molecular weight organic compounds.

In summary, there are manifold patents in literature concerning composite bipolar plate production varying in fillers and additives. However, during the patent search, sufficient information regarding the recycling of the waste product of the composite bipolar plate production could not be found. The recycling of the thermosetting composite materials was usually about rubber or the recycling process was very different such as pyrolysis and extraction. In this invention, bipolar plates with thermosetting polymer binders can be recycled in the process and this recycling process is described in detail.

### Disclosure of Invention

In this patent, composite bipolar plates which have advantages over other bipolar plate types such as corrosion, gas permeability, and strength and the recycling of thermosetting bipolar plates that emerge as waste material during or after the bipolar plate production are investigated. It is concluded that these wastes can be used in bipolar plate production without adding high costs to the process. The properties of the manufactured plates are the same as or even better than the bipolar plates manufactured without additives.

This invention differs from the other patents in that it analyzes the recycling possibilities of bipolar plates which are not suitable for use in fuel cells during and after the polymer composite bipolar plate production, or waste materials which emerge as a result of flow field machining, or plates with a reduced performance or finished cell life, optimizes this process. Bipolar plates make up more than %80 of the fuel cell stack, and when the fuel cell market is taken into consideration, this study is very important both in reducing the stack cost and the environmental impact.

In this invention, it is studied to put the waste plate with thermosetting resin into suitable form. For example, recycling of the waste bipolar plates in pulverized form has decreased the electrical conductivity vastly. On the other hand, using waste additives of particle size greater than 500 microns have deteriorated mechanical properties.

The waste plates with thermosetting resin to be recycled derived during the bipolar plate moulding or after the moulding and having an electrical conductivity of at least 40 S/cm, are grinded into a Retsch grinder to a size of 50 microns- 2.5 mm, classified and added to the mixture prepared for bipolar plate production. Thermosetting resins (polyester, vinyl ester, epoxy, phenol etc.) and conductive filler (graphite, carbon, metal powder), reinforcing agents (organic and inorganic fibers), rheological modifiers (group II oxides and hydroxides) and mould release agents (silicon and non-silicon sprays, stearates, olefins,) are blended in a mixer at suitable amounts in the bipolar plate production. The grinded material is added to the mixture at different amounts with and without screening.

### Mode(s) for Carrying Out the Invention

The production process is given in detail below:
1. cleaning the waste plates with organic solvents(isopropyl alcohol) to remove the organics on it
2. drying the plates at ambient conditions for about 5-10 minutes
3. grinding the plates to 50 microns-2.5 mm
4. grouping the grinded parts with a screen (like below 150 microns, above 150 microns and below 500 microns)
5. mixing 50-90% by weight graphite (preferably 74-84%), 1-5 % by weight carbon (preferably 3%), 5-35% by weight thermosetting resin (preferably 5-15%), 1-10 % by weight 50 micron-2.5 mm grinded thermosetting used material/waste (preferably 4 % and below 150 micron), initiator 0.5-3 %, based on the weight of resin (preferably hexamethylene tetramine etc.) and 1-5 % by weight internal mould release agent (preferably 1% calcium stearate powder), 1-3 % by weight rheological modifier (preferably 1% magnesium oxide), and 1-5 % by weight reinforcing agent (preferably 1 % PAN type carbon fiber) in a mixer
6. the spraying of a non silicone external mould release agent into the mould
7. bipolar plate production with the curing of the mixture at 75 bar and 140°C

Thermosetting bipolar plates in this investigation may also be produced without using rheological modifiers, reinforcing agents, and carbon. When using a reinforcing agent, a significant increase in the mechanical strength, and when using carbon, improved electrical properties and when using a rheological modifier, more homogeneity has been observed.

In this investigation, bipolar plates have been produced with and without grinded/milled materials, and their properties have been compared. Electrical conductivity and mechanical strength has been measured.

**Example 1:** 80 % by weight graphite, 1 % weight internal mould release agent, 19 % weight phenol resin, and hexamethylene tetramin initiator in an amount of 1.5 % based on the weight of resin is mixed in a suitable mixer. The mixture is moulded in a external mould release agent sprayed mould at 140°C, and 75 bar for 10 minutes.

**Example 2**: 80 % by weight graphite, 1% by weight internal mould release agent, 17 % by weight phenol resin and hexamethylene tetramin initiator in an amount of 1.5 % based on the weight of resin, and 2 % by weight used material/waste (below 500 microns) is mixed in a suitable mixer. The mixture is moulded as in Example 1.

**Example 3:** 82 % by weight graphite, 1 % by weight internal mould release agent, and 17 % by weight phenol resin and 1.5 % by weight hexamethylene tetramine initiator of the total weight of the polymer is mixed in a suitable mixer. The mixture is moulded as in Example 1.

Various experiments similar to the examples were carried out. The data and results of the experiments are given in Table 1.

Table 1/A

**Table 1**

| | Example | Example 2 | Example | Example | Example 5 | Example | Example 7 |
|---|---|---|---|---|---|---|---|
| Components, (mass %) | | | | | | | |
| Graphite | 80 | 80 | 82 | 80 | 84 | 80 | 86 |
| Thermosetting polymers | 19 | 17 | 17 | 15 | 15 | 13 | 13 |
| Used Material/waste | - | 2 | - | 4 | - | 6 | - |
| Internal mould release | 1 | 1 | 1 | 1 | 1 | 1 | 1 |
| External mould release | spray | spray | spray | spray | spray | spray | spray |
| | | | | | | | |
| Conductivity, S/cm | 88,86 | 95,89 | 100,9 1 | 108,37 | 113,1 5 | 110,9 2 | 115,0 8 |
| Tensile strength, MPa | 25,5 | 21,41 | 23,06 | 22,64 | 22,66 | 23,05 | 23,22 |
| Flexure strength, MPa | 53,56 | 52,51 | 47,41 | 46,78 | 50,59 | 47,83 | 47,93 |
| Compressive strength, MPa | 43,93 | 41,78 | 41,69 | 41,36 | 39,28 | 41,41 | 40,56 |
| Mouldability | Very good | Very good | Very good | Very good | Very good | Very good | Very good |

Table 1/B

**Table 2**

| Components, (mass %) | Example 8 | Example 9 | Example 10 | Example 11 | Example 12 | Example 13 | Example 14 |
|---|---|---|---|---|---|---|---|
| Graphite | 80 | 88 | 80 | 90 | 78 | 76 | 74 |
| Thermosetting polymer | 11 | 11 | 9 | 9 | 19 | 19 | 19 |
| Used material/Waste | 8 | - | 10 | - | 2 | 4 | 6 |
| Internal mould release | 1 | 1 | 1 | 1 | 1 | 1 | 1 |
| External mould release | spray | spray | spray | spray | spray | spray | spray |
| | | | | | | | |
| Conductivity, S/cm | 118,6 | 142,78 | 139,1 | 142,13 | 87,02 | 79,1 | 74,6 |
| Tensile strength, MPa | 17,97 | 17,51 | 13,24 | 15,07 | 25,16 | 26,34 | 26,92 |
| Flexure strength, MPa | 37,35 | 39,73 | 37,58 | 34,31 | 48,89 | 54,73 | 53,34 |
| Compressive strength, MPa | 37,86 | 35,89 | 27,66 | 30,43 | 54,01 | 56,43 | 56,9 |
| Mouldability | Very good | Very good | Very good | Very good | Very good | Very good | Very good |

Table 1/C

**Table 3**

| Components, (mass %) | Example 15 | Example 16 | Example 17 | Example 18 | Example 19 | Example 20 |
|---|---|---|---|---|---|---|
| Graphite | 72 | 70 | 80 | 76 | 76 | 80 |
| Thermosetting polymers | 19 | 19 | 15 | 19 | 19 | 15 |
| Used material/waste | 8 | 10 | 4 (<150µ) | 4 (<150µ) | 4(>150µ) | 4 (>150µ) |
| Internal mould release | 1 | 1 | 1 | 1 | 1 | 1 |
| External mould release | spray | spray | spray | spray | spray | spray |
| | | | | | | |
| Conductivity, S/cm | 69,5 | 67,69 | 109,2 | 84,7 | 71,7 | 113,02 |
| Tensile strength, MPa | 26,25 | 28,17 | 26,61 | 25,25 | 17,89 | 19,01 |
| Flexure strength, MPa | 52,27 | 53,44 | 54,97 | 57,26 | 57,76 | 50,19 |
| Compressive strength, MPa | 52,02 | 65,44 | 51,2 | 52,84 | 49,65 | 42,29 |
| Mouldability | Very good | Very good | Very good | Very good | Very good | Very good |

Electrical conductivity and strength of the plates have been measured. Although used crushed/grinded plates contain binder, they acted like pure graphite in bipolar plate production process. This way, with the waste additive, electrical conductivity increased and thermosetting bipolar plates containing polymer was used again in the bipolar plate production process.

When the amount of the thermosetting binder is decreased and waste additive with a particle size smaller than 500 microns is increased, it is observed that high amounts of additives can be used in terms of electrical conductivity, but it's not appropriate to have loadings more than %6 in terms of strength. (It is possible to increase the strength values with reinforcing additives and optimizing the process conditions.) Furthermore when the amount of graphite is decreased and instead the waste additive with a particle size smaller than 500 microns is used, an electrical conductivity value is weakened but strength value is grown. It is determined that the optimum use of additives instead of graphite is %6. On the other hand, when a waste additive with a particle size smaller than 150 microns is used instead of a thermosetting binder and graphite, both electrical conductivity and strength values are quite high. When particle size is above 150 microns, deterioration in electrical and mechanical properties is observed.

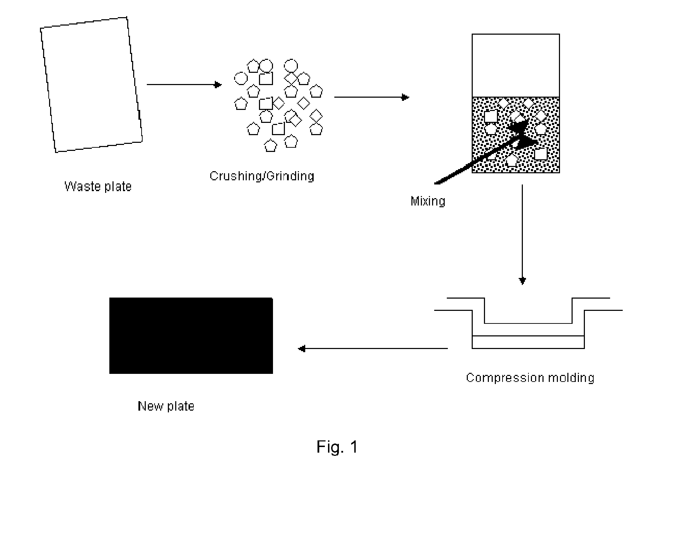

## Claims

1. A thermosetting bipolar plate production method for use in polymer electrolyte membrane fuel cells **characterized in that** the waste bipolar thermosetting material which emerged at the end of or during the bipolar plate production process and consisting of thermosetting binder is used and recycled into the production process wherein the method comprises the steps of:
**a)** cleaning of waste plates having an electrical conductivity higher than 40 S/cm, with organic solvents such as isopropyl alcohol to remove the contamination
**b)** drying of the plates at ambient conditions for 5-10 minutes
**c)** grinding of the plates to 50 micron-2.5 mm particle size
**d)** grouping of the grinded particle according to their sizes with a screen
**e)** Mixing
i. 50-90 % by weight graphite
ii. 5-35 % by weight thermosetting resin
iii. 1-10 % by weight grinded 50 micron- 2.5 mm sized thermosetting used material/waste
iv. 0.5-3 % by weight initiator of the total weight of the polymer
v. %1-5 by weight internal mold release agent in a mixer
**f)** Spraying of the external mold release agent into the mold
**g)** Curing the mixture at 140°C and 75 bar for 10 minutes

2. The method according to Claim 1, wherein said thermosetting bipolar plate production method comprises the steps of:
**a)** cleaning of the waste plates (electrical conductivity higher than 40 S/cm) with organic solvents such as isopropyl alcohol to remove the contamination
**b)** drying of the plates at ambient conditions for 5-10 minutes
**c)** grinding of the plates to 50 micron-2.5 mm particle size
**d)** grouping of the grinded particle according to their sizes with a screen
**e)** Mixing
i. 50 -90 % by weight graphite
ii. 1-5 % by weight carbon
iii. 5-22 % by weight thermosetting resin
iv. 1-10 % by weight grinded 50 micron- 2.5 mm sized thermosetting used material/waste
v. 0.5-3 % by weight initiator of the total weight of the polymer
vi. 1-5 % by weight internal mold release agent
vii. 1-5 % by weight reinforcing agent
viii. 1-3 % by weight rheological modifier in a mixer
**f)** spraying of the external mold release agent into the mold
**g)** curing of the mixture at 140°C, 75 bar for 10 minutes

3. The method according to Claim 2 and Claim 3, wherein said thermosetting bipolar plate production method comprises
Mixing
**a.** 80 % by weight graphite
**b.** 3 % by weight carbon
**c.** 10 % by weight thermosetting polymer selected from the group consisting of phenol resin, polyester and vinyl ester (more preferably phenol)
**d.** 4 % by weight thermosetting used material/waste of particle size smaller than 150 microns
**e.** 1.5 % by weight hexamethylene tetramine of the total weight of the polymer
**f.** 1 % calcium stearate in powder form
**g.** 1 % PAN type carbon fiber and
**h.** 1 % magnesium oxide from the group II oxides in a mixer
**i.** Spraying of the external mold release into the mold
**j.** Curing the mixture at 140°C and 75 bar for 10 minutes

4. A bipolar thermosetting plate produced according to claim 1 consists of:
**a.** 50 % to 90 % by weight graphite
**b.** 5 % to 35 % by weight thermosetting polymer
**c.** 1 % to 10 % by weight thermosetting used material/waste having grinded waste plates with a particle size of 50 micron-2.5 mm and electrical conductivity higher than 40 S/cm.
**d.** 0.5 % to 3 % by weight initiator of the total weight of the polymer
**e.** 1 % to 5 % by weight internal mold release agent in powder form

5. A thermosetting bipolar plate produced according to claim 2 comprising
**a.** 50 % to 90 % by weight graphite
**b.** 1 % to 5% by weight carbon
**c.** 5 % to 22 % by weight thermosetting polymer
**d.** 1 % to 10 % by weight thermosetting used material/waste having grinded waste plates with a particle size of 50 micron-2.5 mm and electrical conductivity higher than 40 S/cm.
**e.** 0.5 % to 3 % by weight initiator of the total weight of the polymer
**f.** 1 % to 5 % by weight internal mold release agent in powder form
**g.** 1 % to 5 % by weight reinforcing agent
**h.** 1 % to 3 to by weight rheological modifier

6. A thermosetting bipolar plate produced according to claim 3 comprising
**a.** 80 % by weight graphite
**b.** 3 % by weight carbon
**c.** 10 % by weight thermosetting polymer selected from the group consisting of phenol resin, polyester or vinyl ester (preferably phenol)
**d.** 4 % by weight thermosetting used material/waste smaller than 150 microns
**e.** %1.5 by weight hexamethylene tetramine of the total weight of the polymer
**f.** 1 % by weight calcium stearate in powder form
**g.** 1 % by weight PAN type carbon fiber
**h.** 1 % by weight magnesium oxide from the group II oxides

## Patentansprüche

1. Das Herstellungsverfahren für eine duroplastische Bipolarplatte für den Einsatz in Polymer-Elektrolyt-Membran-Brennstoffzellen, **dadurch gekennzeichnet, dass** die Abfälle bipolaren Duroplast, die am Ende oder während der Bipolarplatte Produktionsprozess hervorgegangen ist und aus duroplastischen Bindemittel, verwendet wird und in den Produktionsprozess zurückgeführt wird, wobei das Verfahren die folgenden Schritte umfasst:
**a)** Reinigung von Abfällen Platten mit einer elektrischen Leitfähigkeit größer als 40 S/cm, mit organischen Lösungsmitteln, wie Isopropylalkohol, um die Verunreinigungen zu entfernen
**b)** Trocknen der Platten bei Umgebungsbedingungen für 5-10 Minuten
**c)** Schleifen der Platten bis 50 Mikron-2.5 mm Partikelgröße
**d)** Gruppierung der gemahlenen Teilchen nach ihrer Größe mit einem Sieb
**e)** Vermischung
i. 50-90 Gewichts-% Graphit
ii. 5-35 Gewichts-% duroplastisches harz
iii. 1-10 Gewichts-% geschliffen 50 Mikron-2.5 mm große duroplastischen Gebrauchtmaterial/Abfall
iv. 0.5-3 Gewichts-% Initiator des Gesamtgewichts des Polymers
v. 1-5 Gewichts-% inneres Formtrennmittel in einem Mischer
**f)** Spritzen der äußeren Formtrennmittel in die Form
**g)** Härten der Mischung bei 140° C und 75 barfür 10 Minuten

2. Verfahren nach Anspruch 1, wobei das Herstellungsverfahren für die duroplastische Bipolarplatte die folgenden Schritte umfasst:
**a)** Reinigung von Abfällen Platten (mit einer elektrischen Leitfähigkeit größer als 40 S/cm) mit organischen Lösungsmitteln, wie Isopropylalkohol, um die Verunreinigungen zu entfernen
**b)** Trocknen der Platten bei Umgebungsbedingungen 5-10 Minuten
**c)** Schleifen der Platten bis 50 Mikron-2.5 mm Partikelgröße
**d)** Gruppierung der gemahlenen Teilchen nach ihrer Größe mit einem Sieb
**e)** Vermischung
i. 50-90 Gewichts-% Graphit
ii. 1-5 Gewichts-% Kohlenstoff
iii. 5-22 Gewichts-% duroplastisches harz
iv. 1-10 Gewichts-% geschliffen 50 Mikron-2.5 mm große duroplastischen Gebrauchtmaterial/Abfall
v. 0.5-3 Gewichts-% Initiator des Gesamtgewichts des Polymers
vi. 1-5 Gewichts-% inneres Formtrennmittel
vii. 1-5 Gewichts-% verstärkungsmaterial
viii. 1-3 Gewichts-% Rheologiemodifikator in einem Mischer
**f)** Spritzen der äußeren Formtrennmittel in die Form
**g)** Härten der Mischung bei 140° C und 75 bar für 10 Minuten

3. Verfahren nach Anspruch 2 und Anspruch 3, wobei das Herstellungsverfahren für die duroplastische Bipolarplatte umfasst
Vermischung
**a.** 80 Gewichts-% Graphit
**b.** 3 Gewichts-% Kohlenstoff
**c.** 10 Gewichts-% duroplastisches Polymer ausgewählt aus der Gruppe bestehend aus Phenolharz, Polyester und Vinylester (bevorzugt Phenol)
**d.** 4 Gewichts-% duroplastischen Gebrauchtmaterial/Abfall mit einer Partikelgröße kleiner als 150 Mikron
**e.** 1.5 Gewichts-% Hexamethylentetramin des Gesamtgewichts des Polymers
**f.** 1 % Calciumstearat in Pulverform
**g.** 1% PAN-Kohlenstoff-Fasern und
**h.** 1% Magnesiumoxid aus der Gruppe II Oxiden in einem Mischer
**i.** Spritzen der äußeren Formtrennmittel in die Form
**j.** Härten der Mischung bei 140° C und 75 bar für 10 Minuten

4. Eine bipolare duroplastische Platte, die gemäß Anspruch 1 hergestellt wird, besteht aus:
**a.** 50 % bis 90 Gewichts-% Graphit
**b.** 5 % bis 35 Gewichts-% duroplastisches Polymer
**c.** 1 % bis 10 Gewichts-% duroplastischen Gebrauchtmaterial/Abfall mit geschliffen Abfallplatten mit einer Partikelgröße kleiner als 50 Mikron-2.5 mm und einer elektrischen Leitfähigkeit größer als 40 S/cm.
**d.** 0.5 % bis 3 Gewichts-% Initiator des Gesamtgewichts des Polymers
**e.** 1 % bis 5 Gewichts-% inneres Formtrennmittel in Pulverform

5. Eine bipolare duroplastische Platte, die gemäß Anspruch 2 hergestellt wird, umfasst
**a.** 50 % bis 90 Gewichts-% Graphit
**b.** 1 % bis 5 Gewichts-% Kohlenstoff
**c.** 5 % bis 22 Gewichts-% duroplastisches Polymer
**d.** 1 % bis 10 Gewichts-% duroplastischen Gebrauchtmaterial/Abfall mit geschliffen Abfallplatten mit einer Partikelgröße kleiner als 50 Mikron-2.5 mm und einer elektrischen Leitfähigkeit größer als 40 S/cm.
**e.** 0.5 % bis 3 Gewichts-% Initiator des Gesamtgewichts des Polymers
**f.** 1 % bis 5 Gewichts-% inneres Formtrennmittel in Pulverform
**g.** 1 % bis 5 Gewicht-% verstärkungsmaterial
**h.** 1 % bis 3 Gewichts-% Rheologiemodifikator

6. Eine bipolare duroplastische Platte, die gemäß Anspruch 3 hergestellt wird, umfasst
**a.** 80 Gewichts-% Graphit
**b.** 3 Gewichts-% Kohlenstoff
**c.** 10 Gewichts-% duroplastisches Polymer ausgewählt aus der Gruppe bestehend aus Phenolharz, Polyester und Vinylester (bevorzugt Phenol)
**d.** 4 Gewichts-% duroplastischen Gebrauchtmaterial/Abfall kleiner als 150 Mikron
**e.** 1.5 Gewichts-% Hexamethylentetramin des Gesamtgewichts des Polymers
**f.** 1 Gewichts-% Calciumstearat in Pulverform
**g.** 1 Gewichts-% PAN-Kohlenstoff-Fasern
**h.** 1 Gewichts-% Magnesiumoxid aus der Gruppe II Oxiden

## Revendications

1. Une méthode pour la production d'une plaque thermodurcissable bipolaire destinée à être utiliser dans des piles à combustible à membrane électrolyte polymère **caractérisée en ce que** le matériau thermodurcissable bipolaire de déchets qui a apparu à la fin de ou bien pendant le processus de production de la plaque bipolaire et qui consiste d'un liant thermodurcissable est utilisé et recyclé dans le procédé de production dans lequel la méthode comprend les étapes consistant à :
a) nettoyage de plaques de déchets ayant une conductivité électrique supérieure à 40 S/cm, avec des solvants organiques tels que l'alcool isopropylique pour éliminer la contamination
b) séchage des plaques dans des conditions ambiantes pendant 5-10 minutes
c) broyage des plaques à la taille de particule 50 micron - 2.5 mm
d) regroupement de la particule broyé en fonction de leurs tailles avec un tamis
e) mixage de
i. 50-90 % en poids de graphite
ii. 5-35 % en poids de résine thermodurcissable
iii. 1-10 % en poids de matériau/déchets thermodurcissables utilisés et broyé à la taille de 50 micron-2.5 mm
iv. 0.5-3 % en poids d'amorceur du poids total du polymère
v. 1-5 % en poids interne d'agent de démoulage dans un mélangeur
f) pulvérisation d'agent de démoulage externe dans le moule
g) durcissement du mélange à 140°C et de 75 bar pendant 10 minutes

2. Une méthode selon la Revendication 1, dans laquelle la méthode de ladite production de la plaque thermodurcissable bipolaire comprend les étapes consistant à :
a) nettoyage des plaques de déchets (une conductivité électrique supérieure à 40 S/cm) avec des solvants organiques tels que l'alcool isopropylique pour éliminer la contamination
b) séchage des plaques dans des conditions ambiantes pendant 5-10 minutes
c) broyage des plaques à la taille de particule 50 micron-2.5 mm
d) regroupement de la particule broyé en fonction de leurs tailles avec un tamis
e) mixage de
i. 50-90 % en poids de graphite
ii. 1-5 % en poids de carbone
iii. 5-22 % en poids de résine thermodurcissable
iv. 1-10 % en poids de matériau/déchets thermodurcissables utilisés et broyé à la taille de 50 micron-2.5 mm
v. 0.5-3 % en poids d'amorceur au poids total du polymère
vi. 1-5 % en poids interne d'agent de démoulage
vii. 1-5 % en poids d'agent d'renforcement
viii. 1-3 % en poids de modificateur rhéologique
f) pulvérisation d'agent de démoulage externe dans le moule
g) durcissement du mélange à 140°C et de 75 bar pendant 10 minutes

3. Une méthode selon la Revendication 2 et la Revendication 3, dans laquelle ladite production de plaque thermodurcissable bipolaire comprend :
mixage de
a. 80 % en poids de graphite
b. 3 % en poids de carbone
c. 10 % en poids de polymère thermodurcissable choisi du groupe consistant de résine phénolique, polyester et vinylester (de manière plus préférée de phénol)
d. 4 % en poids de matériau/déchets thermodurcissables utilisés de taille de particule inférieure à 150 microns
e. 1.5 % en poids d'hexaméthylènetétramine au poids total du polymère
f. 1 % de stéarate de calcium en forme de poudre
g. 1 % de fibres de type PAN de carbone et
h. 1 % d'oxyde de magnésium à partir des oxydes du groupe Il dans un mélangeur
i. pulvérisation d'agent de démoulage externe dans le moule
j. durcissement du mélange à 140°C et de 75 bar pendant 10 minutes

4. Une plaque thermodurcissable bipolaire produite selon la Revendication 1 qui consiste de :
a. 50 % à 90 % en poids de graphite
b. 5 % à 35 % en poids de polymère thermodurcissable
c. 1 % à 10 % en poids de matériau/déchets thermodurcissables utilisés ayant des plaques de rebut broyé ayant une taille de particule de 50 microns-2.5 mm et une conductivité électrique supérieure à 40 S/cm.
d. 0.5 % à 3 % en poids d'amorceur au poids total du polymère
e. 1 % à 5 % en poids interne agent de démoulage en forme de poudre

5. Une plaque thermodurcissable bipolaire produite selon la Revendication 2, comprenant :
a. 50 % à 90 % en poids de graphite
b. 1 % à 5 % en poids de carbone
c. 5 % à 22 % en poids de polymère thermodurcissable
d. 1 % à 10 % en poids de matériau/déchets thermodurcissables utilisés ayant des plaques de rebut broyé ayant une taille de particule de 50 microns-2.5 mm et une conductivité électrique supérieure à 40 S/cm.
e. 0.5 % à 3 % en poids d'amorceur au poids total du polymère
f. 1 % à 5 % en poids interne agent de démoulage en forme de poudre
g. 1 % à 5 % en poids agent de renforcement
h. 1 à 3 % en poids de modificateur rhéologique

6. Une plaque thermodurcissable bipolaire produite selon la Revendication 3, comprenant :
a. 80 % en poids de graphite
b. 3 % en poids de carbone
c. 10 % en poids de polymère thermodurcissable choisi du groupe consistant en une résine phénolique, polyester ou d'ester vinylique (de préférence le phénol)
d. 4 % en poids du matériau/déchets thermodurcissables utilisés inférieur à 150 microns
e. 1.5 % en poids d'hexaméthylènetétramine au poids total du polymère
f. 1 % en poids de stéarate de calcium en forme de poudre
g. % en poids de PAN de type fibre de carbone
h. 1 % en poids d'oxyde de magnésium à partir des oxydes du groupe Il
